# EUROPEAN PATENT SPECIFICATION

(11) **EP 3 427 616 B1**
(45) Date of publication and mention of the grant of the patent: **27.01.2021**
(21) Application number: 18173041.7
(22) Date of filing: 17.05.2018
(51) Int. Cl.: A47J 27/04, A47J 37/06

(54) **A FOOD STEAMING DEVICE**
VORRICHTUNG ZUM DÄMPFEN VON LEBENSMITTELN
DISPOSITIF DE CUISSON D'ALIMENTS À LA VAPEUR

(30) Priority: 14.07.2017 CN 201710574520
(43) Date of publication of application: 16.01.2019
(73) Proprietor: Huiyang Allan Plastic & Electric Industries Co., Limited, Huizhou City, Guangdong 516035 (CN)
(72) Inventor: CHEUNG, Shu Sang, Huizhou City, Guangdong (CN); PANG, To Yin, Huizhou City, Guangdong (CN)
(74) Representative: Forresters IP LLP

(56) References cited:
- WO-A1-2011/117659
- WO-A2-2006/085317
- CN-Y- 201 346 114
- GB-A- 2 496 709
- JP-A- S5 581 622
- US-A- 5 619 983
- US-A1- 2005 022 676
- US-A1- 2016 360 916
- US-B1- 6 267 046

## Description

### TECHNICAL FIELD

The invention relates to the technical field of electric steam cooker, in particular to a food steaming device which can steamed food evenly.

### BACKROUND OF THE INVENTION

Electric food steaming device have been in the market for over 30 years. However, most electric food steaming devices use an electric kettle type method to boil water from an ambient temperature to boiling point, thus generating steam. The disadvantage of this method is that, depending on the amount of water in the container, steam generation can take a few minutes. Also, the amount of steam generated by this method is low and cannot be effectively control.

Furthermore, these food steaming devices usually have a steaming chamber with a capacity of 9 liters or more, within which the steam does not circulate effectively. As a consequence there are temperature variations inside the steaming chamber, which can result in uneven cooking.

Another operating disadvantage of conventional electric steaming device is the cooking time. Normally the user will need to set the cooking time by considering the weight of the meat or vegetable that is being cooked. For example, when steaming a whole chicken weighing 1kg, the user may estimate a steaming time of 50 minutes, after which the chicken may be overcooked or undercooked. This need to estimate the cooking time is inconvenient as it means that the user needs to check the state of the food being cooked periodically during the steaming process.

US 2016/0360916 A1 discloses a food steaming device that shares the features of the preamble of claim Other food steaming devices with ventilation means are disclosed in US 6267046 B1, JP S5581622 Al and CN 201346114 Y.

### BRIEF SUMMARY OF THE INVENTION

This invention describes an advanced electric food steaming device in accordance with claim 1, with various further preferred features being set out in the dependent claims.

Unlike conventional electric food steaming devices, a preferred embodiment of this invention uses a pump and thermoblock system to provide a large volume of steam. The level of steam (i.e. steam power) can be controlled by altering the pumping rate and/or the power to the thermoblock. According to the invention, the motor driven fan inside the steam container circulates the steam evenly inside the steam container thereby ensuring an even temperature distribution within the steam container of the food steaming device. Furthermore, in a preferred embodiment a temperature probe is also provided. During steam cooking, the temperature probe can be inserted into the food (e.g. meat) being cooked to provide temperature feedback to the steam power control system. This allows precision steam cooking because it enables the user to select and set the final temperature of the meat being steamed. For example, a user wishing to cook a chicken can set the meat temperature to 80°C and then insert the temperature probe into the chicken thigh. During steam cooking, the chicken meat temperature will gradually increase, and when the meat temperature reaches 80°C, a control PCB will stop the steaming and stop the cooking.

By embodying the high power steam generation system, the motor driven fan, and the temperature probe, this invention provides an advanced electric food steaming device that allows fast and precise steam cooking.

### BRIEF DESCRIPTION OF THE DRAWINGS

The present invention will be described with reference to the preferred embodiment shown in the drawings, wherein:
Fig. 1 is a schematic illustration of a food steaming device in accordance with an exemplary embodiment of the invention;
Fig. 2 is an exploded view of the main component of the food steaming device; and
Fig. 3 is a sectional view through the main component of the food steaming device.

### DETAILED DESCRIPTION OF THE INVENTION

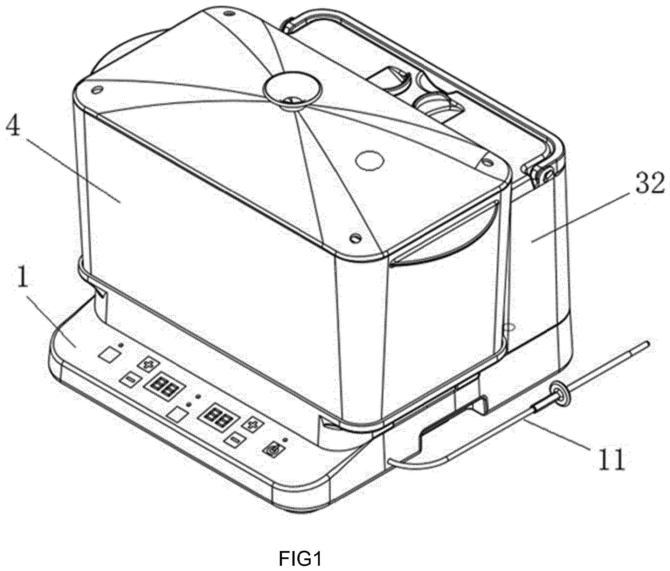

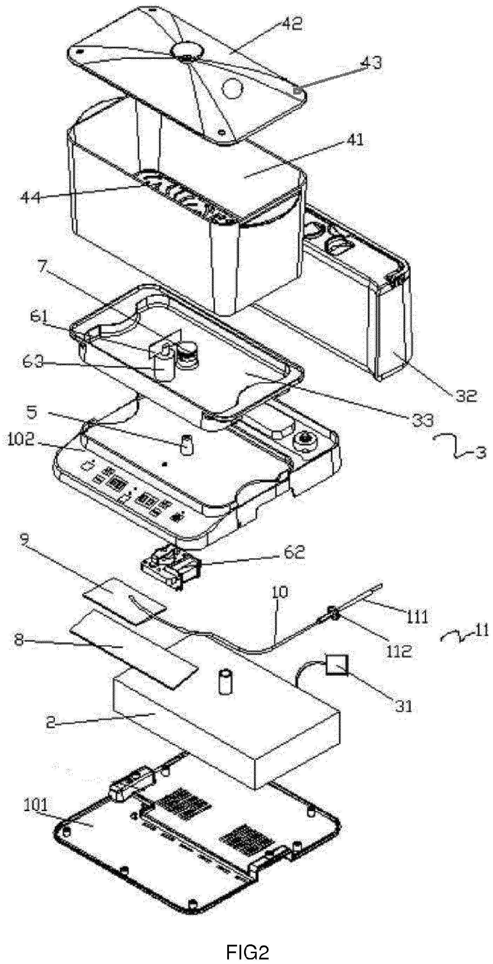

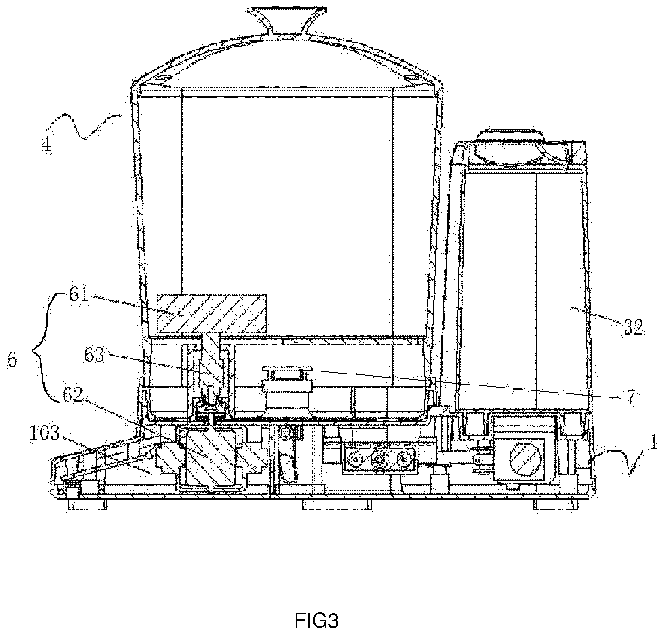

Referring to Figs. 1-3, a food steaming device, comprising a base 1, a heating device 2, preferably in the form of a thermoblock, located within the base for converting water into steam. A water supply device 3 and a steam container 4 are arranged on the base. A first steam outlet 5 for injecting steam into the steam container is provided on the heating device 2.

The food steaming device also comprises a fan device 6 which moves the steam and causes it to circulate within the steam container such that it flows uniformly and rapidly. The fan device comprises a fan 61 and a driving mechanism for powering the fan, which is located in the steam container. The driving mechanism of the fan device 6 includes a motor 62 disposed in the base and a drive shaft 63 for transmitting power. The drive shaft is connected with the fan, and the drive shaft is located on the shaft center line of the fan.

The shape of the fan includes, but is not limited to rectangular or trapezoidal; the shape of the fan is conducive to the rapid and uniform flow of hot steam in the steam container.

By setting the fan device the user can make the hot steam inside the steam container flow evenly and rapidly, which helps evenly distribute the steam thereby preventing temperature variations inside the steam container.

In the preferred embodiment shown the base 1 comprises a base cover 101 and a base body 102 for housing the water supply device 3. The base body being joined to the base cover so as to form a base cavity 103, within which the heating device 2 can be received.

The water supply device 3 comprises a pump 31, a water tank 32 and a drip tray 33. The drip tray is located between the base body 102 and the steam container 4. Preferably the drip tray may be detachably connected to the base body or the steam container.

As can be seen in the preferred embodiment shown, the water tank and the steam container are arranged side by side. That is, the water tank is arranged on one side of the steam container. The water tank 32 and the steam container 4 are both located on the base. Preferably the water tank is detachably connected to the base so that it can be readily removed for refilling under a water tap.

One end of the pump is connected with the water tank, and the other end of the pump is connected with the heating device. The first steam outlet 5 is located on the base 1, and a second steam outlet 7 is arranged on the drip tray. The first and second steam outlets are configured to couple together when the water supply device 3 is arranged on the base 1.

A control PCB 8 and a power supply PCB 9 for controlling the heating temperature of the food are arranged in the base. A probe wire 10 is connected to the power supply PCB and a food temperature probe 11 is arranged on the output end of the probe wire. The food temperature probe is located outside the steam container 4.
In use the food temperature probe 11, which comprises a probe 111 and a probe handle 112, is inserted into the food. The probe wire 10 is passed through the probe handle 112 and connects to the probe 111. Preferably the probe is formed from stainless steel and the probe handle is formed from a high temperature resistant material such as silicone.

By virtue of the control PCB, power supply PCB and the food temperature probe the user can preset the end temperature of food. The real-time measurement of the temperature of the food within the steam container during cooking provides precise steam cooking, which reduces the risk of over-cooking or under-cooking.

The steam container 4 comprises a steam container body 41, which preferably has a volume of 6 liters, and a container lid 42. When mounted on the steam container body the container lid seals the steam container so that the escape of steam from the container is controlled.

In this regard, the container lid is provided with a first steam vent 43. Preferably the first steam vent is configured to enable the probe to pass through into the steam container so that it can be inserted into the food being cooked.

The bottom of the steam container body is provided with a second steam vent 44 which facilitates the flow of steam. The fan is located in the steam container body, the second steam outlet 44, which located in the drip tray, is positioned lower than the steam container body bottom.

The steam container and the water tank are made of see-through material; this allows the user to easily check on the food and the water level in the tank.

In operation the food steaming device of the preferred embodiment of the invention firstly supplies water through a water tank, under the action of the heating device. The water will be heated to hot steam, preferably using a thermoblock as the heating device. The hot steam passed through the first steam outlet and is injected into the steam container through the second steam outlet, which is coupled to the first steam outlet.

The probe can be inserted into the food to be cooked or inserted into the cooking food during the heating process according to the needs of the user. After the food is heated to the preset temperature, the food steaming device can automatically stop working.

Although the description of the present invention is carried out in combination with the specific embodiment, it is obvious to those familiar with the technical field that the concept layout can be changed and modified while achieving the same effect.

### Reference numerals:

- 1: base
- 101: base cover
- 102: base body
- 103: base cavity
- 2: heating device
- 3: water supply device
- 31: pump
- 32: water tank
- 33: drip tray
- 4: steam container
- 41: steam container body
- 42: container lid
- 43: steam vent -A
- 44: steam vent -B
- 5: steam outlet-A
- 6: fan device
- 61: fan
- 62: motor
- 63: drive shaft
- 7: steam outlet-B
- 8: control PCB
- 9: power supply PCB
- 10: probe wire
- 11: temperature probe
- 111: probe
- 112: probe handle

## Claims

1. A food steaming device, comprising:
a base (1);
a heating device (2), located within the base, for converting water into steam;
a water supply device (3) and a steam container (4) for receiving food arranged on the base, wherein the steam container comprises a steam container body (41) and a container lid (42) received on the steam container body;
a first steam outlet (5) provided on the heating device to inject steam into the steam container (4); and
wherein the food steaming device also has a fan device (6) that comprises a fan (61) and a driving mechanism including a motor (62) disposed in the base (1) for powering the fan, said fan being arranged to help evenly distribute the steam in the steam container (4);
wherein the bottom of the steam container is provided with a second steam vent (44) that facilitates the flow of steam; and
**characterized in that** the fan (61), a central axis of which is connected to the motor (62) via a drive shaft (63), is arranged in the steam container body (41); and
wherein the container lid (42) is provided with a first steam vent (43) configured to enable a food temperature probe to pass through.

2. The food steaming device of claim 1, wherein the fan comprises a fan blade and the shape of the fan blade is rectangular or trapezoidal.

3. The food steaming device of claim 1 or 2 , further comprising a control PCB (8) and a power supply PCB (9) arranged in the base to control the heating temperature of the food within the steam container; and
a food temperature probe (11), connected to the power supply PCB via a probe wire (10), and configured to measure the temperature of the food within the steam container.

4. The food steaming device of claim 3, wherein the food temperature probe (11), which comprises a probe (111) and a probe handle (112), is configured to pass through the first steam vent so that, in use, it can be inserted into the food located in the steam container; and wherein the probe wire (10) passes through the probe handle and connects to the probe (11).

5. The food steaming device of claim 4, wherein the probe (111) is formed from stainless steel and the probe handle (112) is formed from high temperature resistant silicone material.

6. The food steaming device of any of the preceding claims, wherein the base (1) comprises a base cover (101) and a base body (102) for housing the water supply device;
wherein the base body (102) combines with the base cover (101) to define a base cavity(103), within which the heating device is received.

7. The food steaming device of claim 6, wherein the water supply device (3) comprises a pump (31), a water tank (32) and a drip tray (33);
wherein the drip tray, which is located between the base body (102) and the steam container (4), is detachably connected to the base body and/or the steam container; and
wherein one end of the pump (31) is connected with the water tank (32), and the other end of the pump is connected with the heating device (2).

8. The food steaming device of claim 7, wherein the first steam outlet (5) is located on the base and a second steam outlet (7), which is coupled to first steam outlet, is provided on the drip tray.

9. The food steaming device of any of the preceding claims, wherein the water tank and the steam container are arranged side by side on the base.

10. The food steaming device of any of the preceding claims, wherein the water tank and the base are detachably connected.

## Patentansprüche

1. Vorrichtung zum Dämpfen von Lebensmitteln, umfassend:
Eine Basis (1);
eine Heizvorrichtung (2), die sich in der Basis befindet, zum Umwandeln von Wasser in Dampf;
eine Wasserversorgungsvorrichtung (3) und einen Dampfbehälter (4) zur Aufnahme von Lebensmitteln, der auf der Basis angeordnet ist, wobei der Dampfbehälter einen Dampfbehälterkörper (41) und einen Behälterdeckel (42) umfasst, der auf dem Dampfbehälterkörper aufgenommen ist;
einen ersten Dampfauslass (5), der an der Heizvorrichtung vorgesehen ist, um Dampf in den Dampfbehälter (4) zu injizieren; und
wobei die Vorrichtung zum Dämpfen von Lebensmitteln außerdem eine Lüftervorrichtung (6) aufweist, die einen Lüfter (61) und einen Antriebsmechanismus umfasst, der einen in der Basis (1) angeordneten Motor (62) zum Antreiben des Lüfters einschließt, wobei der Lüfter eingerichtet ist, zu helfen, den Dampf gleichmäßig im Dampfbehälter (4) zu verteilen;
wobei der Boden des Dampfbehälters mit einem zweiten Dampfablass (44) versehen ist, der den Dampfstrom erleichtert; und
**dadurch gekennzeichnet, dass** der Lüfter (61), wovon eine mittige Achse über eine Antriebswelle (63) mit dem Motor (62) verbunden ist, im Dampfbehälterkörper (41) angeordnet ist; und
wobei der Behälterdeckel (42) mit einem ersten Dampfablass (43) versehen ist, der ausgelegt ist, einer Temperatursonde für Lebensmittel zu ermöglichen, zu passieren.

2. Vorrichtung zum Dämpfen von Lebensmitteln nach Anspruch 1, wobei der Lüfter einen Lüfterflügel aufweist und die Form des Lüfterflügels rechteckig oder trapezförmig ist.

3. Vorrichtung zum Dämpfen von Lebensmitteln nach Anspruch 1 oder 2, die ferner eine Steuerplatine (8) und eine Stromversorgungsplatine (9) umfasst, die in der Basis angeordnet sind, um die Heiztemperatur der Lebensmittel im Dampfbehälter zu steuern; und eine Temperatursonde (11) für Lebensmittel umfasst, die über einen Sondendraht (10) mit der Stromversorgungsplatine verbunden ist und ausgelegt ist, die Temperatur der Lebensmittel im Dampfbehälter zu messen.

4. Vorrichtung zum Dämpfen von Lebensmitteln nach Anspruch 3, wobei die Temperatursonde (11) für Lebensmittel, die eine Sonde (111) und einen Sondengriff (112) umfasst, ausgelegt, ist durch den ersten Dampfablass zu passieren, sodass sie, im Gebrauch, in die Lebensmittel eingeführt werden kann, die sich im Dampfbehälter befinden; und wobei der Sondendraht (10) durch den Sondengriff durchgeht und sich mit der Sonde (11) verbindet.

5. Vorrichtung zum Dämpfen von Lebensmitteln nach Anspruch 4, wobei die Sonde (111) aus Edelstahl geformt ist und der Probengriff (112) aus hochtemperaturbeständigem Silikonmaterial geformt ist.

6. Vorrichtung zum Dämpfen von Lebensmitteln nach irgendeinem der vorhergehenden Ansprüche, wobei die Basis (1) einen Basisdeckel (101) und einen Basiskörper (102) zur Unterbringung der Wasserversorgungsvorrichtung;
wobei sich der Basiskörper (102) mit dem Basisdeckel (101) kombiniert, um einen Basishohlraum (103) zu definieren, innerhalb dessen die Heizvorrichtung aufgenommen ist.

7. Vorrichtung zum Dämpfen von Lebensmitteln nach Anspruch 6, wobei die Wasserversorgungsvorrichtung (3) eine Pumpe (31), einen Wassertank (32) und ein Auffangschale (33) umfasst;
wobei die Auffangschale, die sich zwischen dem Basiskörper (102) und dem Dampfbehälter (4) befindet, lösbar mit dem Basiskörper und/oder dem Dampfbehälter verbunden ist; und
wobei ein Ende der Pumpe (31) mit dem Wassertank (32) verbunden ist und das andere Ende der Pumpe mit der Heizvorrichtung (2) verbunden ist.

8. Vorrichtung zum Dämpfen von Lebensmitteln nach Anspruch 7, wobei der sich der erste Dampfauslass (5) an der Basis befindet und ein zweiter Dampfauslass (7), der an den ersten Dampfauslass gekoppelt ist, auf der Auffangschale bereitgestellt ist.

9. Vorrichtung zum Dämpfen von Lebensmitteln irgendeinem der vorhergehenden Ansprüche, wobei der Wassertank und der Dampfbehälter Seite an Seite auf der Basis angeordnet sind.

10. Vorrichtung zum Dämpfen von Lebensmitteln irgendeinem der vorhergehenden Ansprüche, wobei der Wassertank und die Basis lösbar verbunden sind.

## Revendications

1. Dispositif de cuisson d'aliments à la vapeur, comprenant :
une base (1) ;
un dispositif chauffant (2), situé dans la base, pour convertir de l'eau en vapeur ;
un dispositif d'alimentation en eau (3) et un récipient de vapeur (4) qui est destiné à recevoir des aliments et qui est agencé sur la base, le récipient de vapeur comprenant un corps de récipient de vapeur (41) et un couvercle de récipient (42) reçu sur le corps de récipient de vapeur ;
une première sortie de vapeur (5) située sur le dispositif chauffant pour injecter de la vapeur dans le récipient de vapeur (4) ; et
le dispositif de cuisson d'aliments à la vapeur comportant également un dispositif de ventilation (6) qui comprend un ventilateur (61) et un mécanisme d'entraînement incluant un moteur (62) disposé dans la base (1) pour entraîner le ventilateur, ledit ventilateur étant conçu pour aider à répartir de façon homogène la vapeur dans le récipient de vapeur (4) ;
le fond du récipient de vapeur étant muni d'une seconde évacuation de vapeur (44) qui facilite l'écoulement de vapeur ; et
le dispositif de cuisson d'aliments à la vapeur étant **caractérisé en ce que** le ventilateur (61), dont un axe central est relié au moteur (62) par l'intermédiaire d'un arbre d'entraînement (63), est agencé dans le corps de récipient de vapeur (41) ; et
le couvercle de récipient (42) étant muni d'une première évacuation de vapeur (43) configurée pour permettre le passage d'une sonde de température alimentaire.

2. Dispositif de cuisson d'aliments à la vapeur selon la revendication 1, dans lequel le ventilateur comprend une pale de ventilateur et la forme de la pale de ventilateur est rectangulaire ou trapézoïdale.

3. Dispositif de cuisson d'aliments à la vapeur selon la revendication 1 ou 2, comprenant en outre une PCB de régulation (8) et une PCB d'alimentation (9) agencées dans la base pour réguler la température de chauffage des aliments dans le récipient de vapeur ; et
une zone de température alimentaire (11), connectée à la PCB d'alimentation par l'intermédiaire d'un fil de sonde (10) et configurée pour mesurer la température des aliments dans le récipient de vapeur.

4. Dispositif de cuisson d'aliments à la vapeur selon la revendication 3, dans lequel la sonde de température alimentaire (11), qui comprend une sonde (111) et une poignée de sonde (112), est configurée pour passer par la première évacuation de vapeur de sorte que, lors de l'utilisation, elle puisse être insérée dans les aliments situés dans le récipient de vapeur ; et dans lequel le fil de sonde (10) passe par la poignée de sonde et se connecte à la sonde (11).

5. Dispositif de cuisson d'aliments à la vapeur selon la revendication 4, dans lequel la sonde (111) est constituée d'acier inoxydable et la poignée de sonde (112) est constituée d'un matériau de silicone résistant aux hautes températures.

6. Dispositif de cuisson d'aliments à la vapeur selon l'une quelconque des revendications précédentes, dans lequel la base (1) comprend un couvercle de base (101) et un corps de base (102) pour loger le dispositif d'alimentation en eau ;
et dans lequel le corps de base (102) se combine avec le couvercle de base (101) pour définir une cavité de base (103) dans laquelle le dispositif chauffant est reçu.

7. Dispositif de cuisson d'aliments à la vapeur selon la revendication 6, dans lequel le dispositif d'alimentation en eau (3) comprend une pompe (31), un réservoir d'eau (32) et un plateau d'égouttage (33) ;
dans lequel le plateau d'égouttage, qui est situé entre le corps de base (102) et le récipient de vapeur (4), est relié amovible au corps de base et/ou au récipient de vapeur ; et
dans lequel une extrémité de la pompe (31) est reliée au réservoir d'eau (32) et l'autre extrémité de la pompe est reliée au dispositif chauffant (2).

8. Dispositif de cuisson d'aliments à la vapeur selon la revendication 7, dans lequel la première sortie de vapeur (5) est située sur la base et une seconde sortie de vapeur (7), qui est accouplée à la première sortie de vapeur, est située sur le plateau d'égouttage.

9. Dispositif de cuisson d'aliments à la vapeur selon l'une quelconque des revendications précédentes, dans lequel le réservoir d'eau et le récipient de vapeur sont agencés côte à côte sur la base.

10. Dispositif de cuisson d'aliments à la vapeur selon l'une quelconque des revendications précédentes, dans lequel le réservoir d'eau et la base sont reliés amovibles.
